# EUROPEAN PATENT APPLICATION

(11) **EP 4 772 954 A1**
(43) Date of publication of application: **08.07.2026**
(21) Application number: 23950784.1
(22) Date of filing: 31.08.2023
(51) Int. Cl.: G05D 1/69, B65G 1/00, B66F 9/06, G05D 1/246, G05D 1/698, G06Q 10/08, B65G 1/04

(54) **CONVEYANCE SYSTEM AND CONVEYANCE METHOD**

(71) Applicant: Fuji Corporation, Chiryu-shi, Aichi 472-8686 (JP)
(72) Inventor: MAJIMA Mizuki, Chiryu-shi, Aichi 472-8686 (JP); SAWANAMI Hisato, Chiryu-shi, Aichi 472-8686 (JP)
(74) Representative: Grünecker Patent- und Rechtsanwälte PartG mbB
(86) International application number: PCT/JP2023/031762
(87) International publication number: WO 2025/046838

(57) **Abstract**

A conveyance system includes: an automated guided vehicle; a reception section configured to receive a designation of an arrangement area in which the conveyance target object is to be arranged and a designation of an arrangement direction for the conveyance target object in the arrangement area; a conveyance information setting section configured to set a conveyance destination of the conveyance target object in the arrangement area such that the conveyance target object is arranged according to the arrangement direction, and to set a conveyance route from a conveyance origin to the conveyance destination based on map information; and a control section configured to cause the automated guided vehicle to convey the conveyance target object to the conveyance destination according to the conveyance route.

## Description

### Technical Field

The present description discloses a conveyance system and a conveyance method.

### Background Art

Conventionally, as this type of conveyance system, there has been proposed a conveyance system including a conveyance robot and a control device that determines a conveyance destination of an article and calculates a conveyance path of the article to remotely control the conveyance robot (for example, see Patent Literature 1). The control device (route calculation section) receives a designation of an article arrangement area and determines any one of the small areas included in the article arrangement area as the conveyance destination. The control device (route calculation section) selects a small area as the conveyance destination, from among the small areas in which no article is placed, or selects, as the conveyance destination, a small area close to an entrance/exit of the article arrangement area when no article is placed in all the small areas included in the article arrangement area.

### Citation List

### Patent Literature

Patent Literature 1: WO 2021/039595

### Summary of the Invention

### Technical Problem

However, in the above-described conveyance system, a case where multiple articles are to be arranged in the arrangement area is not considered, and the multiple articles cannot be arranged in the same area as desired.

A main object of the present disclosure is to provide a conveyance system or a conveyance method capable of conveying multiple conveyance target objects to an arrangement area in a desired arrangement.

### Solution to Problem

The present disclosure adopts the following means to achieve the above-described main object.

A conveyance system of the present disclosure is a conveyance system including:
an automated guided vehicle configured to convey a conveyance target object:
a reception section configured to receive a designation of an arrangement area in which the conveyance target object is to be arranged and a designation of an arrangement direction for the conveyance target object in the arrangement area;
a conveyance information setting section configured to set a conveyance destination of the conveyance target object in the arrangement area such that the conveyance target object is arranged according to the arrangement direction, and to set a conveyance route from a conveyance origin to the conveyance destination based on map information; and
a control section configured to cause the automated guided vehicle to convey the conveyance target object to the conveyance destination according to the conveyance route.

In the conveyance system of the present disclosure, the designation of the arrangement area in which the conveyance target object is to be arranged and the designation of the arrangement direction of the conveyance target object in the arrangement area are received, the conveyance destination of the conveyance target object in the arrangement area is set such that the conveyance target object is arranged according to the arrangement direction, and the conveyance route from the conveyance origin to the conveyance destination is set based on the map information. Accordingly, multiple conveyance target objects can be conveyed to the arrangement area in a desired arrangement.

A conveyance method of the present disclosure is a conveyance method of conveying a conveyance target object using an automated guided vehicle, the conveyance method including:
receiving a designation of an arrangement area in which the conveyance target object is to be arranged and a designation of an arrangement direction of the conveyance target object in the arrangement area;
setting a conveyance destination of the conveyance target object such that the conveyance target object is arranged in the arrangement area according to the arrangement direction;
setting a conveyance route from a conveyance origin to the conveyance destination based on map information; and
causing the automated guided vehicle to convey the conveyance target object to the conveyance destination according to the conveyance route.

The conveyance method of the present disclosure can achieve the same effect as that of the conveyance system of the present disclosure.

### Brief Description of Drawings

Fig. 1 is an external perspective view of multiple caged carts arranged in a cart storage place of a shop or the like and an automated guided vehicle configured to convey a caged cart.
Fig. 2 is an external perspective view of the automated guided vehicle and the caged cart.
Fig. 3 is an external perspective view of the automated guided vehicle.
Fig. 4 is a side view of the automated guided vehicle.
Fig. 5 is a side view of the automated guided vehicle.
Fig. 6 is a view illustrating a state in which the automated guided vehicle has entered a space under the caged cart.
Fig. 7 is a view illustrating a state in which the automated guided vehicle is coupled to the caged cart.
Fig. 8 is a block diagram of the conveyance system including the automated guided vehicle and a management device.
Fig. 9 is a diagram illustrating an example of article information.
Fig. 10 is a diagram illustrating an example of conveyance destination area information.
Fig. 11 is a diagram illustrating an example of obstacle information.
Fig. 12 is a flowchart illustrating an example of conveyance destination area setting processing.
Fig. 13 is a diagram illustrating a map and a conveyance destination area.
Fig. 14 is a flowchart illustrating an example of a conveyance control routine.
Fig. 15 is a diagram illustrating a state in which a conveyance destination and a conveyance route are set when a conveyance target cart is conveyed to a conveyance destination area.
Fig. 16 is a diagram illustrating coordinate values of the conveyance destination in Fig. 15.
Fig. 17 is a diagram illustrating a state in which a conveyance destination and a conveyance route are set when a conveyance target cart is further conveyed to a conveyance destination area in which caged carts that have been conveyed are arranged.
Fig. 18 is a diagram illustrating coordinate values of the conveyance destination in Fig. 17.

### Description of Embodiments

Next, an embodiment of the present disclosure will be described with reference to the drawings.

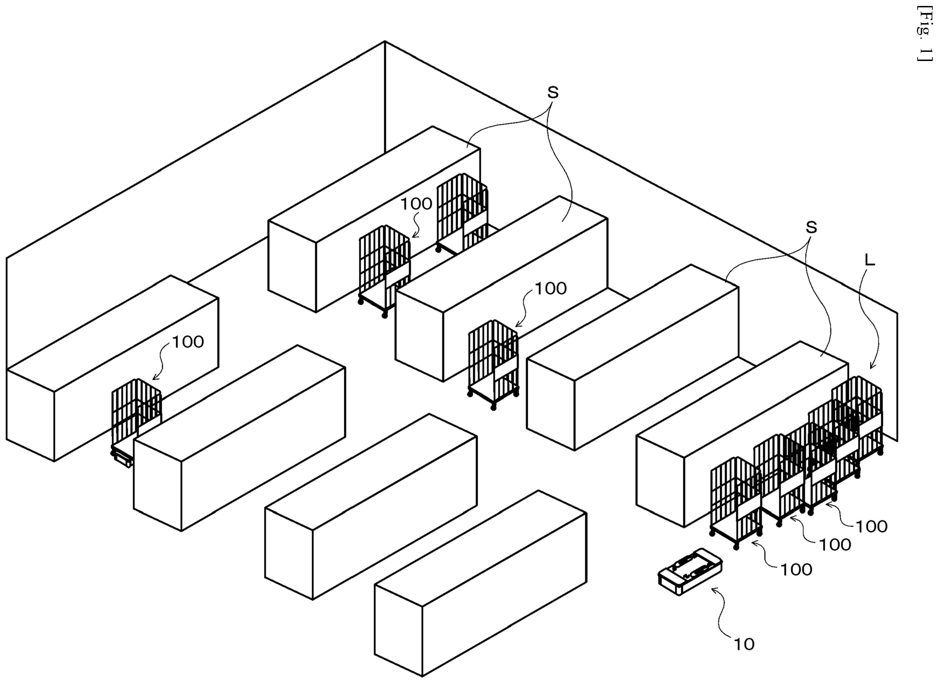

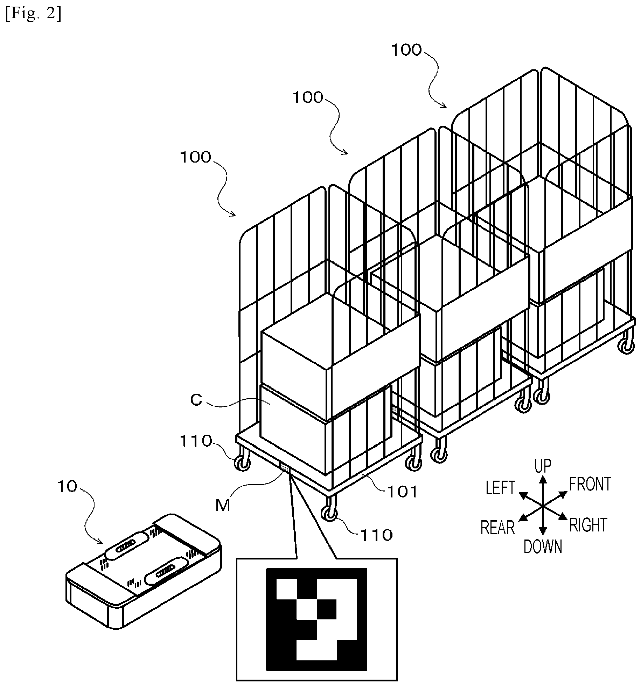

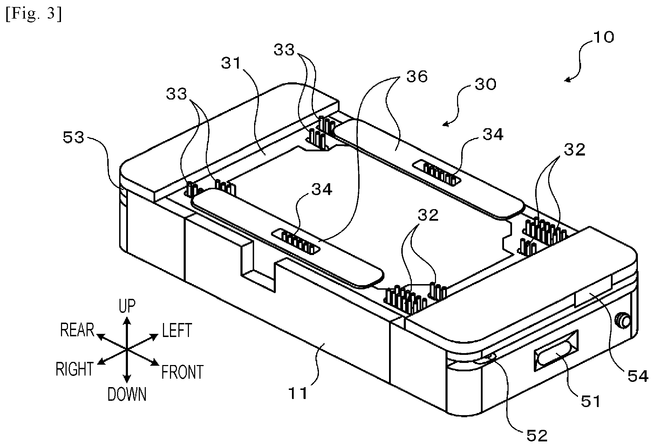

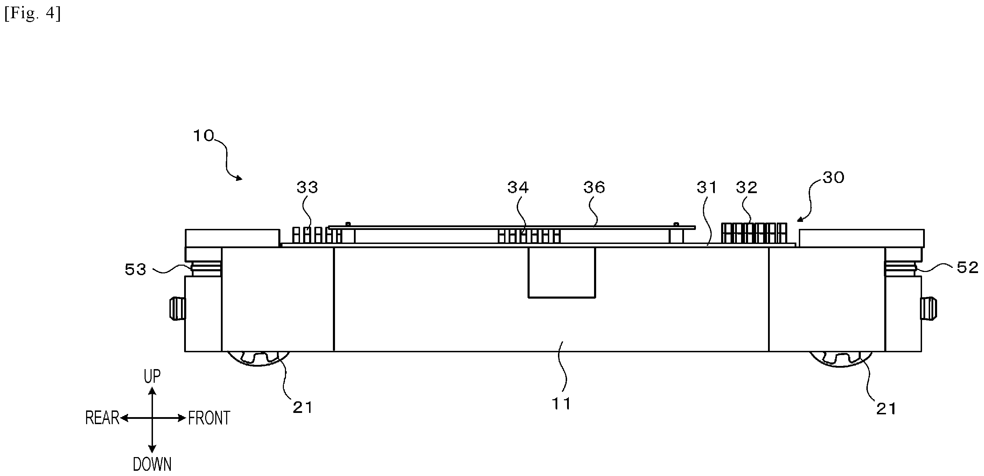

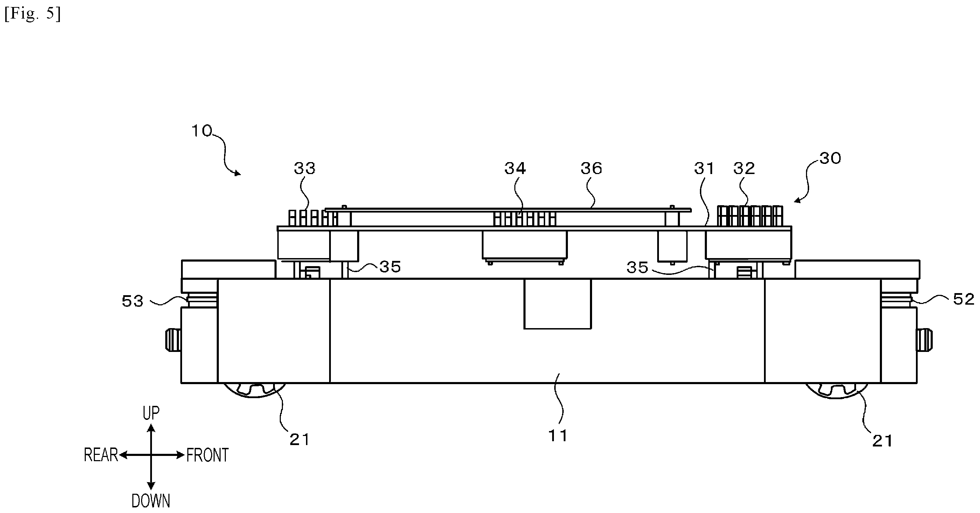

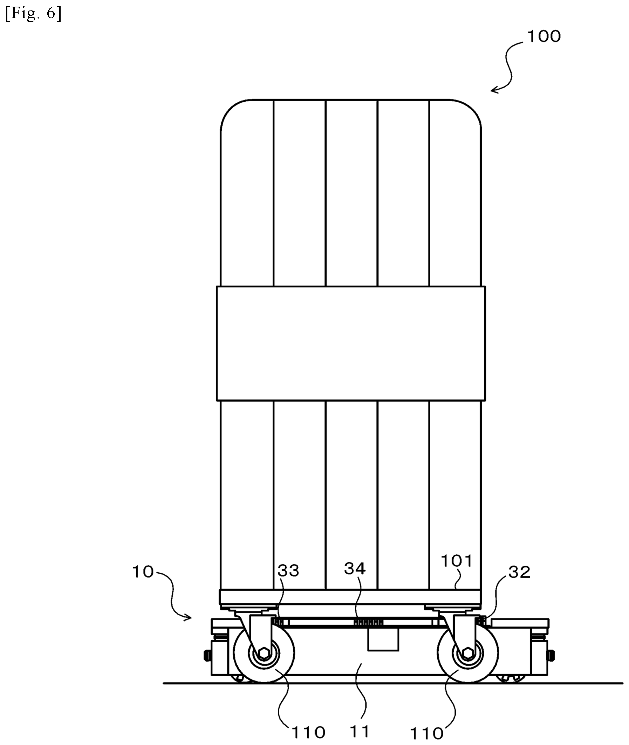

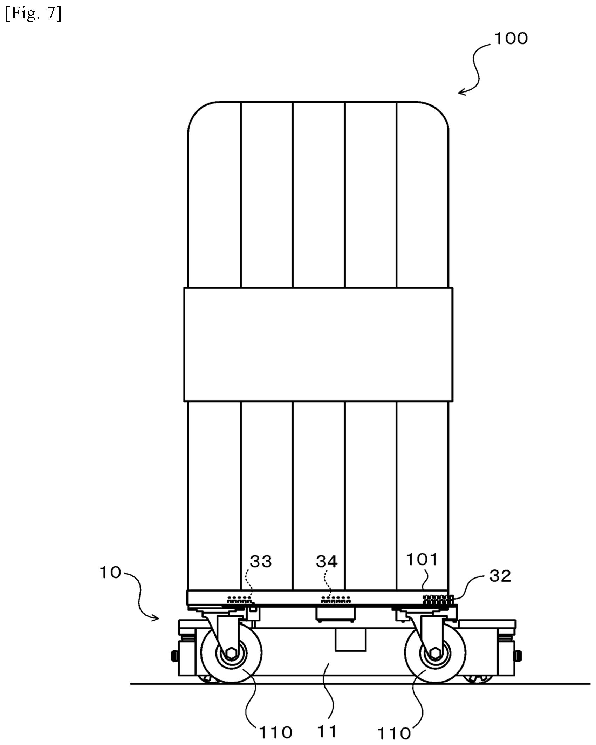

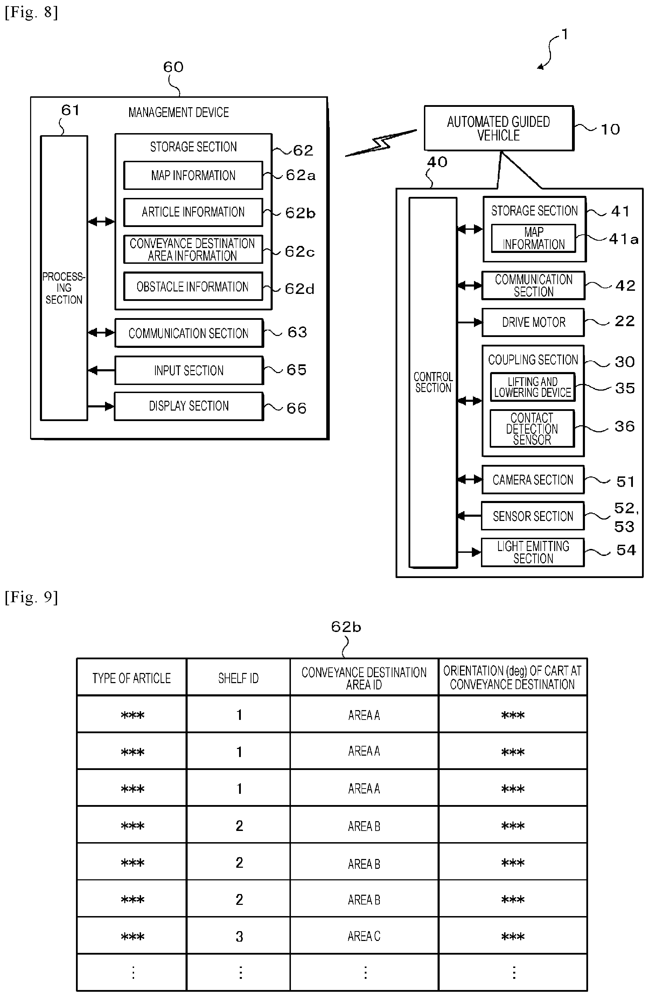

Fig. 1 is an external perspective view of multiple caged carts 100 arranged in cart storage place L of a shop or the like and automated guided vehicle 10 configured to convey caged cart 100. Fig. 2 is an external perspective view of caged cart 100 and automated guided vehicle 10. Fig. 3 is an external perspective view of automated guided vehicle 10. Figs. 4 and 5 are side views of automated guided vehicle 10. Fig. 6 is a view illustrating a state in which automated guided vehicle 10 has entered a space under caged cart 100. Fig. 7 is a view illustrating a state in which automated guided vehicle 10 is coupled to caged cart 100. Fig. 8 is a block diagram of conveyance system 1 including automated guided vehicle 10 and management device 60.

As illustrated in Fig. 1, conveyance system 1 of the present embodiment is used in a distribution center, a warehouse, a shop, or the like having multiple shelves S, and includes one or more automated guided vehicles 10 and management device 60 (see Fig. 8) that manages the operation of automated guided vehicles 10. Automated guided vehicle 10 is an autonomous mobile robot (AMR) that is coupled to caged cart 100 and that conveys caged cart 100 to designated shelf S.

As illustrated in Fig. 2, for example, caged cart 100 has rectangular and mesh-shaped loading platform portion 101 on which article C can be loaded, and multiple (four) casters 110 that are rotatably attached to four corners of a lower surface of loading platform portion 101. Marker M such as an AR marker, a two-dimensional code, or a barcode for identifying caged cart 100 is provided on loading platform portion 101 of caged cart 100 (in the present embodiment, a central portion of an outer edge front end surface of loading platform portion 101). By reading marker M, automated guided vehicle 10 recognizes caged cart 100 (conveyance target cart) to be conveyed and the type of article C loaded on loading platform portion 101. Marker M may be attached to article C loaded on loading platform portion 101. Identification information for recognizing caged cart 100 and article C is not limited to marker M. For example, the identification information may be a unique ID for identifying caged cart 100. The identification information may be identification information (text, pictures, or the like) written on an outer box of article C.

As illustrated in Fig. 3, automated guided vehicle 10 of the present embodiment has a flat rectangular parallelepiped appearance with a low height. Automated guided vehicle 10 includes vehicle body portion 11, multiple (for example, four) wheels 21 rotatably attached to a bottom surface of vehicle body portion 11, and multiple (for example, four) drive motors 22 (see Fig. 8) that rotationally drive corresponding wheels 21. In the present embodiment, multiple wheels 21 are configured as mecanum wheels including multiple rollers rotatable around axes inclined by 45 degrees with respect to a rotation axis of the wheel on an outer periphery of the wheel. Automated guided vehicle 10 can move vehicle body portion 11 in all directions or make vehicle body portion 11 turn (such as a spin turn, a pivot turn, or a power turn) by controlling rotation directions and rotation speeds of corresponding wheels 21 independently of each other with multiple drive motors 22. Multiple wheels 21 may also be configured as omni wheels including multiple rollers that are rotatable around axes intersecting three-dimensionally with respect to the rotation axis of the wheel. In other words, multiple wheels 21 may be any type of wheel as long as the wheels are capable of moving or turning vehicle body portion 11 in multiple directions.

In addition, as illustrated in Figs. 3 to 5, automated guided vehicle 10 includes coupling section 30 that is provided on an upper surface of vehicle body portion 11 and that can be coupled to caged cart 100 in a state where vehicle body portion 11 has entered a space under caged cart 100. Coupling section 30 includes flat plate-shaped lifting and lowering plate 31, coupling pins 32, 33, and 34 that extend upward with respect to lifting and lowering plate 31, and lifting and lowering device 35 that lifts and lowers lifting and lowering plate 31. Lifting and lowering plate 31 has a left-right width substantially equal to a left-right width of vehicle body portion 11 and a front-rear width slightly shorter than a front-rear width of vehicle body portion 11 to cover the upper surface of vehicle body portion 11. Coupling pin 32 is provided at a front portion of lifting and lowering plate 31, coupling pin 33 is provided at a rear portion of lifting and lowering plate 31, and coupling pin 34 is provided at an intermediate portion between the front portion and the rear portion of lifting and lowering plate 31. As illustrated in Figs. 6 and 7, coupling section 30 lifts lifting and lowering plate 31 by lifting and lowering device 35 in a state where vehicle body portion 11 has entered under caged cart 100, thereby engaging at least one of coupling pins 32, 33, and 34 with the underside of loading platform portion 101 of caged cart 100. Accordingly, automated guided vehicle 10 and caged cart 100 are coupled to each other, and automated guided vehicle 10 can convey (tow) caged cart 100.

As illustrated in Figs. 3 to 5, contact detection sensors 36 (spring sensors) for detecting that coupling section 30 (coupling pins 32, 33, and 34) is in contact with (coupled to) loading platform portion 101 of caged cart 100 are provided on both left and right sides of lifting and lowering plate 31. Contact detection sensor 36 includes a plate that is biased upward by a spring, with its upper end positioned at approximately the same height as coupling pins 32, 33, and 34 with respect to lifting and lowering plate 31. When coupling pins 32, 33, and 34 are engaged with loading platform portion 101 of caged cart 100, the plate of contact detection sensor 36 comes into contact with loading platform portion 101, and is lowered relatively to coupling pins 32, 33, and 34 while the spring is compressed. Contact detection sensor 36 detects that coupling section 30 is in contact with (coupled to) loading platform portion 101 of caged cart 100 by detecting a state where the plate is relatively lowered.

Furthermore, as illustrated in Fig. 8, automated guided vehicle 10 includes control section 40 responsible for overall control, storage section 41 that stores various information including map information 41a, communication section 42 for performing communication (wireless communication) with management device 60, camera section 51 as an image capturing device, sensor sections 52 and 53, and light emitting section 54 that illuminates an area ahead of vehicle body portion 11. Camera section 51 is installed on a front surface of vehicle body portion 11 to recognize an area ahead of vehicle body portion 11. Sensor sections 52 and 53 are installed on a front surface and a rear surface of vehicle body portion 11, respectively, to detect surrounding objects. Sensor sections 52 and 53 detect surrounding objects and a distance to the objects. In the present embodiment, as sensor sections 52 and 53, a light detection and ranging (LiDAR) sensor is used that scans the surrounding area with laser light, receives each reflected light, measures the time until the reflected light is received, thereby measuring distance data for each scanning angle, and obtaining two-dimensional point cloud data of surroundings. Light emitting section 54 is installed on the front surface of vehicle body portion 11, and illuminates the area ahead to make it easier for camera section 51 to recognize surrounding objects in dark environments.

Control section 40 is configured as a microprocessor centered on CPU, and includes ROM for storing a processing program, RAM for temporarily storing data, a timing section, and the like in addition to the CPU. As illustrated in Fig. 8, an image signal from camera section 51, detection signals from sensor sections 52 and 53, a detection signal from contact detection sensor 36, and the like are input to control section 40. Control section 40 outputs control signals to drive motors 22, a control signal to lifting and lowering device 35, and the like.

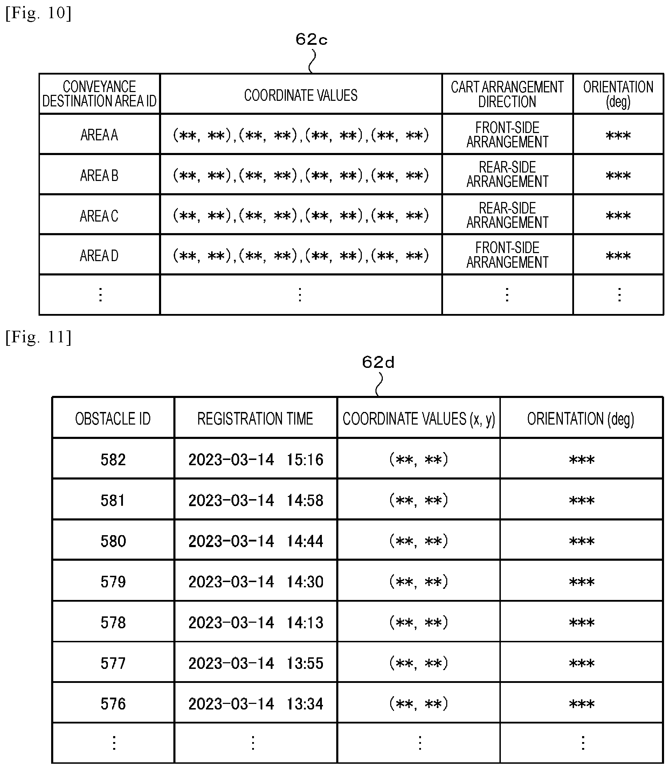

As illustrated in Fig. 8, management device 60 includes processing section 61, storage section 62, and communication section 63 for performing communication (wireless communication) with each automated guided vehicle 10. Input section 65 (a mouse, a keyboard, or the like), display section 66 (a liquid crystal display, an organic EL display, or the like), a printer, or the like is connected to management device 60. Processing section 61 is configured as a microprocessor centered on CPU, and includes ROM for storing a processing program, RAM for temporarily storing data, and the like in addition to the CPU. Storage section 62 is a storage such as an HDD or an SSD, and storage section 62 stores various information such as article information 62b (see Fig. 9), conveyance destination area information 62c (see Fig. 10), and obstacle information 62d (see Fig. 11) in addition to map information 62a.

As illustrated in Fig. 9, article information 62b is information in which the type of article C, a shelf ID for identifying shelf S on which article C is arranged, a conveyance destination area ID for identifying a conveyance destination area of article C (caged cart 100), and an orientation of caged cart 100 at the conveyance destination are associated with each other, and is registered in advance by the operator. Further, management device 60 creates unique marker M for each type of article C according to an instruction of the operator, and prints (issues) created marker M by using the printer. Then, the operator attaches printed marker M to a designated location on caged cart 100 or article C loaded on caged cart 100. Accordingly, automated guided vehicle 10 can recognize the type of article C by reading marker M with camera section 51, and can acquire the conveyance destination area and the orientation at the conveyance destination of caged cart 100 (conveyance target cart) loaded with article C based on the recognized type of article C. Here, the conveyance destination area is a rectangular area for which the operator can freely designate the position and the size on the map defined by map information 62a. The conveyance destination of caged cart 100 is set as coordinate values in the conveyance destination area in a conveyance control routine described later.

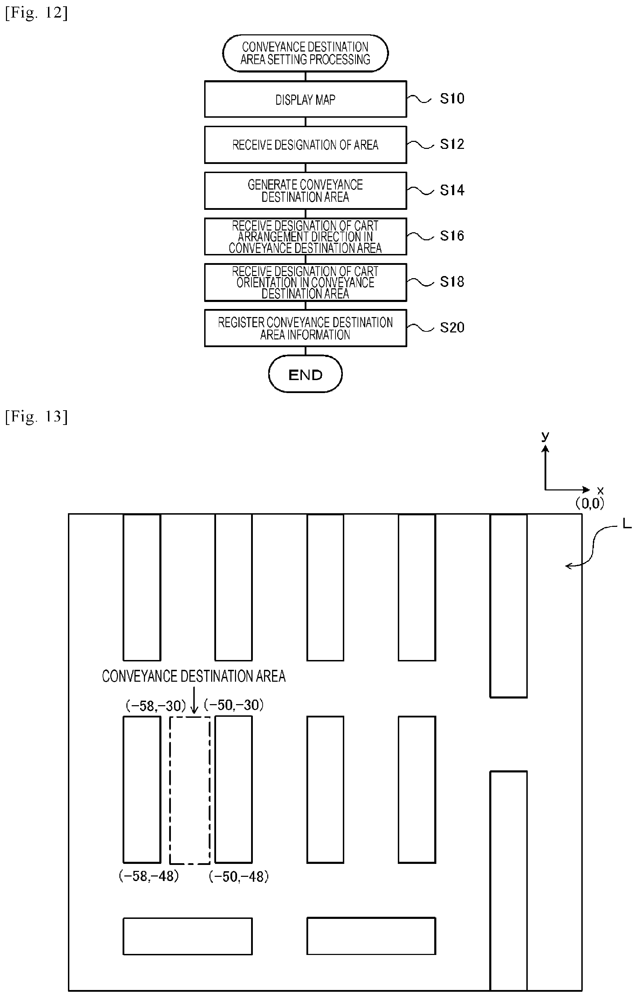

As illustrated in Fig. 10, conveyance destination area information 62c is information in which the conveyance destination area ID, the coordinate values of the conveyance destination area, the arrangement direction of caged cart 100, and the orientation of caged cart 100 are associated with each other, and is set by conveyance destination area setting processing. Fig. 12 is a flowchart illustrating an example of conveyance destination area setting processing executed by processing section 61 of management device 60. In the conveyance destination area setting processing, processing section 61 first displays a map defined by map information 62a on display section 66 (S10). Fig. 13 shows an example of a map displayed on display section 66. Subsequently, processing section 61 receives a designation of an area on the map (S12) and generates a conveyance destination area based on the designated area (S14). The conveyance destination area is, for example, a rectangular area defined by two points as diagonally opposite corners. The area is designated by the operator operating input section 65 (mouse or the like) to designate two points on the map. Further, as illustrated in Fig. 13, the coordinate values of the conveyance destination area are, for example, given as coordinate values (x, y) of each vertex of the conveyance destination area (rectangular area) in an XY orthogonal coordinate system of the map, with a predetermined position (for example, an upper right point of the map) as an origin. Next, processing section 61 receives a designation of the arrangement direction of caged cart 100 in the conveyance destination area (S16) and receives a designation of the orientation of caged cart 100 in the conveyance destination area (S18). The arrangement direction is an arrangement direction when caged carts 100 are arranged successively with no gap therebetween in the conveyance destination area, and examples thereof include a front-side arrangement in which caged carts 100 are arranged from a front side with no gap therebetween, and a rear-side arranged in which caged carts 100 are arranged from a rear side with no gap therebetween. The orientation is an orientation of caged cart 100 when caged cart 100 is arranged in the conveyance destination area, and includes, for example, two directions that are the positive and negative directions of the X axis and two directions that are the positive and negative directions of the Y axis. Then, processing section 61 registers the conveyance destination area generated in S14, the arrangement direction designated in S16, and the orientation designated in S18 in conveyance destination area information 62c in association with the conveyance destination area ID (S20), and ends the conveyance destination area setting processing.

Obstacle information 62d is information on an obstacle arranged on the map. As illustrated in Fig. 11, obstacle information 62d is associated with an obstacle ID for identifying an obstacle, a registration time indicating the date and time when the obstacle is registered, a position (x, y) of the obstacle on the map, and an orientation of the obstacle (caged cart 100). The obstacle is set to a position of the conveyance destination when automated guided vehicle 10 conveys caged cart 100 to the conveyance destination by a conveyance control routine described later.

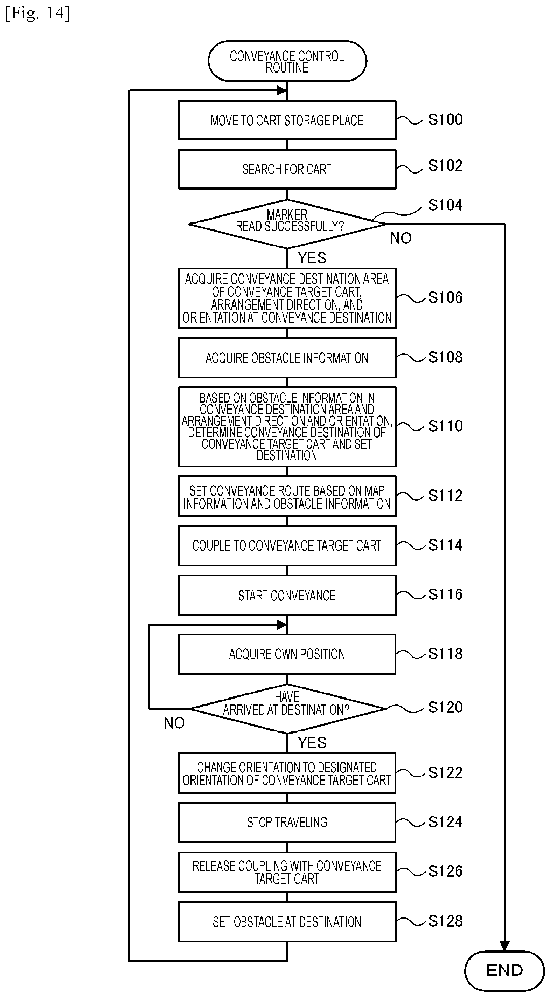

Next, an operation of conveyance system 1 of the present embodiment configured in this manner will be described. In particular, as illustrated in Fig. 1, the operation of automated guided vehicle 10 when conveying multiple caged carts 100 arranged in cart storage place L one by one to each conveyance destination will be described. Fig. 14 is a flowchart illustrating an example of a conveyance control routine executed by control section 40 of automated guided vehicle 10. This processing is executed when the conveyance of caged cart 100 (articles) is instructed by management device 60.

When the conveyance control routine is executed, control section 40 first causes drive motor 22 to operate such that automated guided vehicle 10 moves to cart storage place L (S100). Subsequently, control section 40 searches for caged carts 100 in the surroundings (S102). The search for caged carts 100 is performed, for example, by capturing images of the surroundings of vehicle body portion 11 by using camera section 51 and determining whether markers M attached to caged carts 100 can be recognized by processing the captured images. When it is determined that the recognition of marker M has failed (NO in S104), control section 40 determines that there is no caged cart 100 to be conveyed in cart storage place L, and ends the conveyance control routine.

On the other hand, when it is determined that the recognition of marker M has succeeded (YES in S104), control section 40 determines that there is caged cart 100 to be conveyed to cart storage place L, and sets caged cart 100 as the conveyance target cart, and acquires, based on the marker ID of recognized marker M, the coordinate values of the conveyance destination area to which the conveyance target cart is to be conveyed, the arrangement direction of the conveyance target cart in the conveyance destination area, and the orientation of the conveyance target cart at the conveyance destination (S106). The processing of S106 is performed, for example, by transmitting the marker ID recognized by control section 40 to management device 60, identifying the type of article C from the marker ID received by management device 60, deriving the coordinate values, the arrangement direction, and the orientation of the corresponding conveyance destination area from article information 62b and conveyance destination area information 62c based on the type of article C, and transmitting the coordinate values, the arrangement direction, and the orientation to control section 40. Control section 40 may identify the type of article C from the marker ID and transmit the identified type of article C to management device 60. Control section 40 may store article information 62b and conveyance destination area information 62c in storage section 41, identify the type of article C from the marker ID, and acquire the coordinate values, the arrangement direction, and the orientation of the corresponding conveyance destination area from article information 62b and conveyance destination area information 62c based on the identified type of article C.

Next, control section 40 acquires obstacle information 62d from management device 60 (S108). Obstacle information 62d may be stored in storage section 41 of automated guided vehicle 10. Subsequently, control section 40 determines the conveyance destination of the conveyance target cart and sets the conveyance destination as the destination based on obstacle information 62d (the positions and the orientations of caged carts 100 that have been conveyed) in the conveyance destination area, the arrangement direction of the conveyance target cart, and the orientation of the conveyance target cart at the conveyance destination (S110). The conveyance destination of the conveyance target cart is set such that, in the conveyance destination area, the conveyance target carts are arranged in the arrangement direction with no gap therebetween and with a predetermined clearance from caged carts 100 that have been conveyed. Then, control section 40 sets the conveyance route from the current location to the destination so as to avoid obstacles (caged carts 100 that have been conveyed) arranged on the map based on obstacle information 62d (S112). The conveyance route is set as follows. That is, control section 40 recognizes the current location (own position) of the vehicle by obtaining the surrounding shape based on point cloud data measured by sensor sections 52 and 53 (LiDAR), and comparing (matching) the obtained surrounding shape with the map information stored in storage section 41. Subsequently, control section 40 performs route searching based on the recognized current location, the set destination, and map information 41a. Next, control section 40 determines whether automated guided vehicle 10 conveying caged cart 100 can pass to the destination for each of the searched routes. In the present embodiment, obstacle information 62d includes the positions of caged carts 100 that have been conveyed (obstacles) on the map and the orientations of caged carts 100, and map information 41a includes width information. Since the size of caged cart 100 is known, control section 40 can determine whether the searched route is passable based on the size of automated guided vehicle 10 including coupled caged cart 100, map information 41a, and obstacle information 62d. Then, control section 40 sets a route in which the required time or the moving distance is the shortest among the passable routes as the conveyance route. Accordingly, the conveyance target cart can be conveyed to the destination in a short time without interfering with caged carts 100 that have been conveyed. Control section 40 of automated guided vehicle 10 may transmit the current location of the vehicle to management device 60, so that management device 60 may set the conveyance route based on map information 62a and obstacle information 62d and transmit the conveyance route to automated guided vehicle 10.

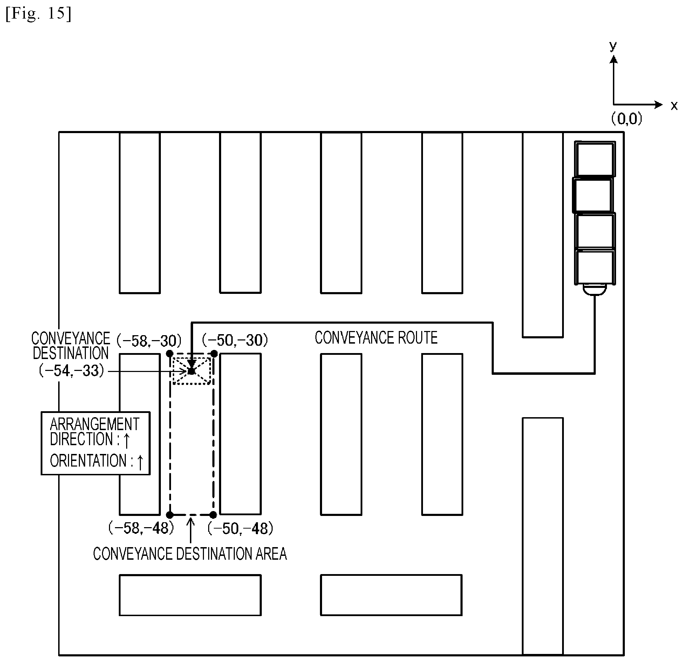

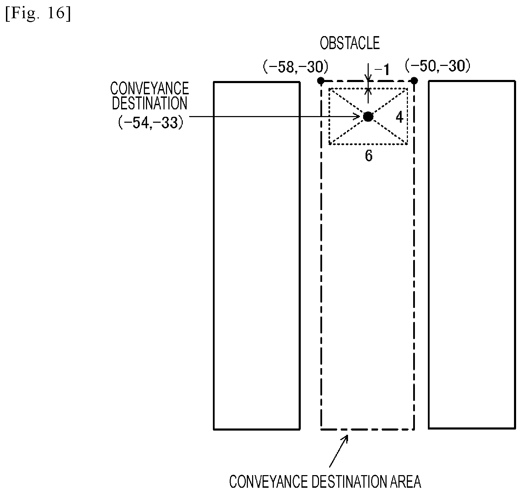

Fig. 15 is a diagram illustrating a state in which a conveyance destination and a conveyance route are set when a conveyance target cart is conveyed to a conveyance destination area. Fig. 16 is a diagram illustrating coordinate values of the conveyance destination in Fig. 15. When there are no obstacles (caged carts 100 that have been conveyed) in the conveyance destination area to which the conveyance target cart is to be conveyed, the conveyance destination of the conveyance target cart is set as XY coordinate values at the center of the conveyance target cart when the conveyance target cart is arranged in a designated orientation with a certain clearance from the boundary in the arrangement direction of the conveyance destination area, as illustrated in the figure. In addition, the shortest route among the routes on the map from cart storage place L to the conveyance destination is set as the conveyance route.

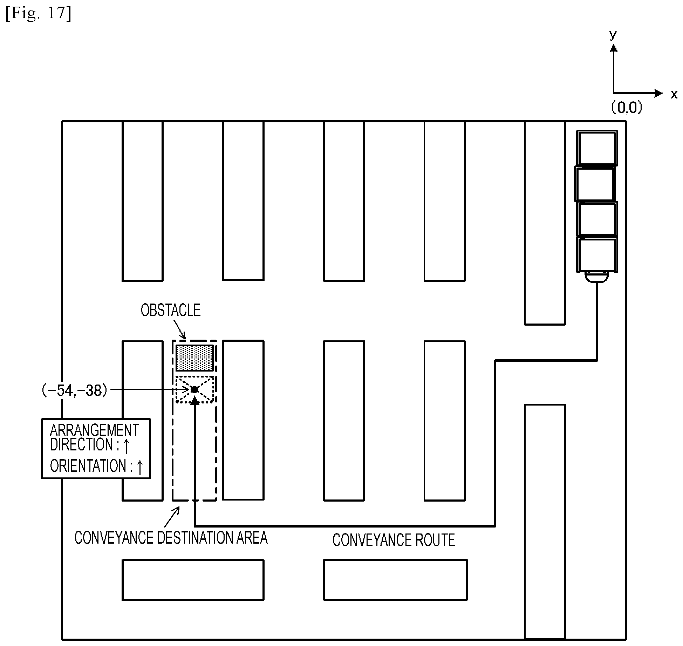

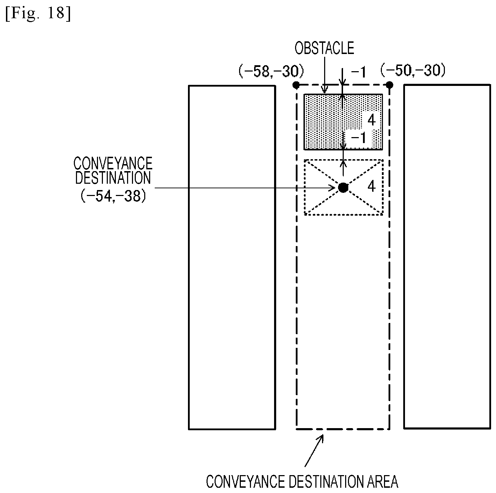

Fig. 17 is a diagram illustrating a state in which a conveyance destination and a conveyance route are set when a conveyance target cart is further conveyed to a conveyance destination area in which caged carts 100 that have been conveyed are arranged. Fig. 18 is a diagram illustrating coordinate values of the conveyance destination in Fig. 17. When the conveyance target cart is further conveyed to the conveyance destination area in which caged carts 100 that have been conveyed are arranged, the conveyance destination of the conveyance target cart is set as XY coordinate values at the center of the conveyance target cart when the conveyance target cart is arranged with a designated orientation in the arrangement direction with no gap therebetween and with a certain clearance from the obstacles (caged carts 100 that have been conveyed) in the conveyance destination area, as illustrated in the figure. The shortest route among routes, that can avoid obstacles (caged carts 100 that have been conveyed), of the routes on the map from cart storage place L to the conveyance destination is set as the conveyance route. As a result, multiple caged carts 100 can be arranged in the conveyance destination area in the arrangement direction with no gap therebetween, each with its respective orientation.

When the destination and the conveyance route of the conveyance target cart are set, control section 40 causes automated guided vehicle 10 to be coupled to the conveyance target cart (S114). This processing is performed as follows. That is, control section 40 first recognizes two casters 110 of the conveyance target cart by using sensor section 52. Subsequently, control section 40 causes drive motors 22 to operate such that automated guided vehicle 10 enters a space under the conveyance target cart from between recognized two casters 110. Next, control section 40 causes coupling pins 32, 33, and 34 to be lifted by lifting and lowering device 35 to engage with loading platform portion 101 of the conveyance target cart, thereby coupling the conveyance target cart.

When automated guided vehicle 10 is coupled to the conveyance target cart, control section 40 starts the conveyance of the conveyance target cart according to the set conveyance route (S116). Then, control section 40 acquires the own position of automated guided vehicle 10 (S118) and determines whether automated guided vehicle 10 has arrived at the destination (S120). When it is determined that automated guided vehicle 10 has not arrived at the destination, control section 40 returns to S118, and when it is determined that automated guided vehicle 10 has arrived at the destination, control section 40 causes drive motors 22 to operate such that the orientation of the conveyance target cart matches the orientation acquired in S106 by turning or the like (S122), and stops traveling (S124). Then, control section 40 releases the coupling with the conveyance target cart (S126), sets an obstacle at a position (destination) to which the conveyance target cart is conveyed (S128), and then returns to S100. The setting of the obstacle is performed by control section 40 transmitting the coordinate values and the orientation of the conveyance target cart to management device 60, and by management device 60 assigning an obstacle ID and a registration time to the coordinate values and the orientation of the received obstacle (conveyance target cart), and registering them in obstacle information 62d. Accordingly, since obstacle information 62d is added when the conveyance control routine is executed next, when next caged cart 100 is conveyed to the same conveyance destination area, the destination of next caged cart 100 is set to a position, having no gap in the arrangement direction with respect to caged carts 100 that have been conveyed, in the conveyance destination area. If there are any caged carts 100 that have been conveyed between the current location and the destination, the conveyance route is set to avoid caged carts 100.

Here, a correspondence relationship between main elements of the embodiment and main elements of the present disclosure described in the claims will be described. That is, caged cart 100 of the present embodiment is an example of the conveyance target object of the present disclosure, automated guided vehicle 10 is an example of the automated guided vehicle, processing section 61 of management device 60 that executes the conveyance destination area setting processing is an example of the reception section, control section 40 that executes the processing of S106 to S112 of the conveyance control routine is an example of the conveyance information setting section, and control section 40 that executes the processing of S114 to S126 of the conveyance control routine is an example of the control section. Control section 40 that executes the processing of S128 of the conveyance control routine is an example of an obstacle setting section.

It is needless to say that the present disclosure is not limited in any way to the above-described embodiment, and the present disclosure can be embodied in various aspects as long as the aspects fall within the technical scope of the present disclosure.

For example, in the embodiment described above, automated guided vehicle 10 is configured to tow caged cart 100 by engaging coupling pin 34 of coupling section 30 with loading platform portion 101 of caged cart 100. However, automated guided vehicle 10 may lift and convey caged cart 100 using coupling section 30.

As described above, in the automated guided vehicle of the present disclosure, the designation of the arrangement area in which the conveyance target object is to be arranged and the designation of the arrangement direction of the conveyance target object in the arrangement area are received, the conveyance destination of the conveyance target object in the arrangement area is set such that the conveyance target object is arranged according to the arrangement direction, and the conveyance route from the conveyance origin to the conveyance destination is set based on the map information. Accordingly, multiple conveyance target objects can be conveyed to the arrangement area in a desired arrangement.

The automated guided vehicle of the present disclosure may further include an obstacle setting section configured to set an obstacle at a position of the conveyance target object that has been conveyed, in which the conveyance information setting section may set the conveyance route from the conveyance origin to the conveyance destination to avoid the obstacle. In this way, it is possible to arrange multiple conveyance target objects in the arrangement area while preventing interference with the conveyance target objects that have been conveyed. In this case, the conveyance information setting section may set the conveyance destination such that, in the arrangement direction, the conveyance destination has a predetermined clearance from the conveyance target object that has been conveyed and set as the obstacle. In this way, multiple conveyance target objects can be arranged at appropriate distances in the arrangement area.

In the conveyance system of the present disclosure, the reception section may receive a designation of an orientation of the conveyance target object at the conveyance destination, and the control section may convey the conveyance target object such that the conveyance target object faces the designated orientation. In this way, it is possible to improve the efficiency of the work performed by the worker or the like at the conveyance destination of the conveyance target object.

Although the present disclosure is applied to the conveyance system, the present disclosure may be applied to a conveyance method of conveying a conveyance target object using an automated guided vehicle.

### Industrial Applicability

The present disclosure can be applied to industries involved in manufacturing an automated guided vehicle and the like.

### Reference Signs List

1: conveyance system, 10: automated guided vehicle, 11: vehicle body portion, 21: wheels, 22: drive motor, 30: coupling section, 31: lifting and lowering plate, 32, 33, 34: coupling pin, 35: lifting and lowering device, 36: contact detection sensor, 40: control section, 41: storage section, 41a: map information, 42: communication section, 51: camera section, 52, *53:* sensor section, 54: light emitting section, 60: management device, 61: processing section, 62: storage section, 62a: map information, 62b: article information, 62c: conveyance destination area information, 62d: obstacle information, 63: communication section, 65: input section, 66: display section, 100: caged cart, 101: loading platform portion, 110: caster, C: article, L: cart storage place, M: marker, S: shelf.

## Claims

1. A conveyance system comprising:
an automated guided vehicle configured to convey a conveyance target object:
a reception section configured to receive a designation of an arrangement area in which the conveyance target object is to be arranged and a designation of an arrangement direction for the conveyance target object in the arrangement area;
a conveyance information setting section configured to set a conveyance destination of the conveyance target object in the arrangement area such that the conveyance target object is arranged according to the arrangement direction, and to set a conveyance route from a conveyance origin to the conveyance destination based on map information; and
a control section configured to cause the automated guided vehicle to convey the conveyance target object to the conveyance destination according to the conveyance route.

2. The conveyance system according to Claim 1, further comprising
an obstacle setting section configured to set an obstacle at a position of the conveyance target object that has been conveyed,
wherein the conveyance information setting section sets the conveyance route from the conveyance origin to the conveyance destination to avoid the obstacle.

3. The conveyance system according to Claim 2, wherein the conveyance information setting section sets the conveyance destination such that, in the arrangement direction, the conveyance destination has a predetermined clearance from the conveyance target object that has been conveyed and set as the obstacle.

4. The conveyance system according to any one of Claims 1 to 3,
wherein the reception section receives a designation of an orientation of the conveyance target object at the conveyance destination, and
the control section conveys the conveyance target object such that the conveyance target object faces the designated orientation.

5. A conveyance method of conveying a conveyance target object using an automated guided vehicle, the conveyance method comprising:
receiving a designation of an arrangement area in which the conveyance target object is to be arranged and a designation of an arrangement direction of the conveyance target object in the arrangement area;
setting a conveyance destination of the conveyance target object such that the conveyance target object is arranged in the arrangement area according to the arrangement direction;
setting a conveyance route from a conveyance origin to the conveyance destination based on map information; and
causing the automated guided vehicle to convey the conveyance target object to the conveyance destination according to the conveyance route.
